# FASCICULE DE BREVET EUROPEEN

(11) **EP 2 192 663 B1**
(45) Date de publication et mention de la délivrance du brevet: **22.06.2016**
(21) Numéro de dépôt: 09176790.5
(22) Date de dépôt: 23.11.2009
(51) Int. Cl.: H02B 5/00

(54) **POSTE DE DISTRIBUTION ELECTRIQUE À HAUTE TENSION SOUS ENVELOPPE MÉTALLIQUE**
HOCHSPANNUNG METALLGEKAPSELTE ELEKTRISCHE SCHALTANLAGE
HIGH VOLTAGE METAL ENCLOSED ELECTRICAL SWITCHGEAR

(30) Priorité: 27.11.2008 FR 0858052
(43) Date de publication de la demande: 02.06.2010
(73) Titulaire: General Electric Technology GmbH, 5400 Baden (CH)
(72) Inventeur: Habert, Jean-Louis, 73410 Epersy (FR); Andreoletti, Gilbert, 73100 Aix-Les-Bains (FR)
(74) Mandataire: Ilgart, Jean-Christophe

(56) Documents cités:
- EP-A1- 1 168 551
- EP-A1- 1 978 613
- FR-A1- 2 815 784

## Description

### DOMAINE DE L'INVENTION

L'invention concerne les postes de distribution et de traitement à haute tension du courant électrique, installés, la plupart du temps, en plein air et destinés à recevoir le courant électrique en provenance d'installations productrices d'électricité pour dispatcher cette dernière à des clients utilisateurs et consommateurs de courant électrique.

Elle concerne, en particulier, la technologie, dite "poste sous enveloppe métallique (PSEM)"

### ART ANTERIEUR ET PROBLEME POSE

En préambule, le concept de transport et de distribution du courant électrique sous haute tension, notamment par l'utilisation de poste à haute tension, met en oeuvre deux types de technologies d'isolation des conducteurs. La première est une technologie d'isolation dans l'air et la deuxième est une technologie d'isolation sous enveloppe métallique.

La technologie d'isolation dans l'air est celle utilisée par les lignes, dites "à haute tension", telles que celles que l'on rencontre en très grande quantité dans le paysage, portées par des pylônes d'une hauteur de plusieurs dizaines de mètres. Les différents conducteurs transportant le courant, éventuellement sous différentes phases, doivent être écartés les uns des autres et des endroits accessibles aux êtres vivants d'une distance déterminée. Ceci explique la hauteur des pylônes en question et l'écartement de ces lignes à haute tension entre elles.

La technologie, dite "sous enveloppe métallique", enferme les conducteurs dans des enveloppes hermétiquement fermées et remplis de gaz isolant, à savoir de l'hexafluorure de soufre (SF₆). Dans ce cas, le matériel est beaucoup plus sophistiqué, mais permet un gain considérable en surface au sol et en volume.

Les postes électriques utilisant la technologie sous enveloppe métallique reçoivent une multitude de lignes à haute tension aériennes pour lesquelles l'isolation dans l'air est utilisée. Ils utilisent des conducteurs aériens de raccordement détournant ces lignes vers le sol où l'énergie électrique est prise en charge par une installation utilisant la technologie sous enveloppe métallique. Ainsi, dans un poste électrique, du type "sous enveloppe métallique", se trouvent différents composants, tous isolés sous enveloppe métallique et rassemblés dans un ensemble appelé "travée". Une telle travée comporte différents appareillages de traitement du courant électrique, à savoir des appareillages de coupure, d'aiguillage, des transformateurs, des disjoncteurs. Ces travées sont reliées par des conducteurs intermédiaires à des barres conductrices, généralement horizontales et destinées à relier électriquement toutes les travées entre elles. Ainsi, chaque ligne à haute tension arrivant au poste haute tension sous enceinte métallique est reliée à au moins une travée et, de ce fait, peut être mise en connexion avec n'importe quelle autre ligne à haute tension, aboutissant au poste sous enceinte métallique. On précise que l'ensemble des travées et des barres conductrices est souvent placé dans un bâtiment fermé.

Il s'est parfois avéré indispensable de disposer d'au moins un jeu de barres conductrices de secours pour pouvoir court-circuiter une ou plusieurs travées et procéder à des opérations de réparation ou de maintenance des travées, l'énergie électrique devant être distribuée sans interruption pour ne pas léser les demandeurs de courant électrique. En effet, la perte d'exploitation d'une travée du poste sous enveloppe métallique a des conséquences très importantes, en particulier lorsque cette travée est reliée à un générateur de forte puissance ou à une ligne hautement stratégique.

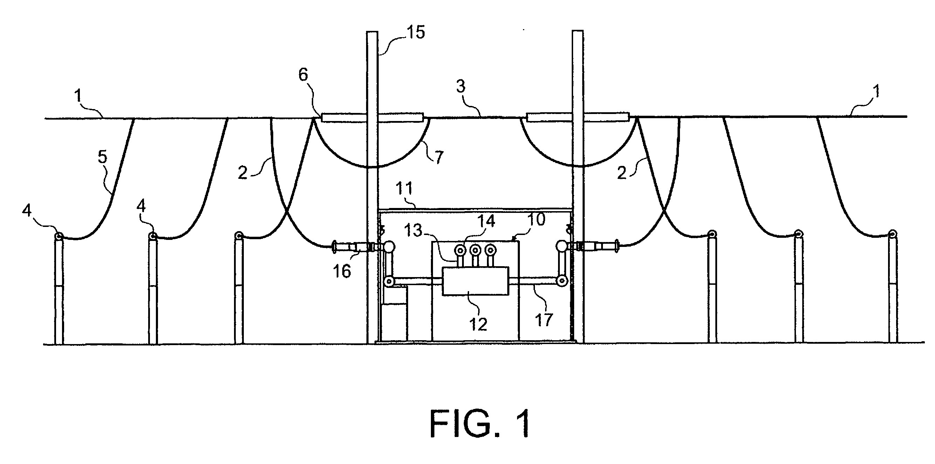

La figure 1 montre, en coupe, un poste haute tension sous enceinte métallique, utilisé actuellement, de type "linéaire". On distingue les lignes haute tension 1, qui permettent l'arrivée et le départ du courant électrique du poste électrique. Ces dernières arrivent à des points d'arrivée et de départ 6, au niveau de portiques 15 placés latéralement par rapport à un bâtiment principal 11, à l'intérieur duquel se trouve le PSEM 10, c'est-à-dire le poste sous enceinte métallique proprement dit (PSEM). Des conducteurs aériens de raccordement 2 plutôt verticaux permettent de connecter ces lignes à haute tension 1 avec les éléments du PSEM 10, par l'intermédiaire de traversées de murs 16, à travers le bâtiment principal 11. Des bras de raccordement 17 prolongent cette connexion jusqu'au PSEM 10 et sont raccordés aux travées 12 se trouvant à l'intérieur du poste électrique. Ces dernières sont reliées à au moins un jeu de barres conductrices 14, par l'intermédiaire d'éléments de liaison 13. Les bras de raccordement 17, les travées 12, les éléments de liaisons 13, les barres conductrices 14 sont des éléments utilisant la technologie sous enveloppe métallique. En d'autres termes, ces éléments sont constitués de canalisations, de coudes et de raccordements métalliques, à l'intérieur desquels se trouvent des conducteurs et un gaz isolant entourant ce dernier, sous une pression d'environ 3 à 7 bars.

On note, sur les deux côtés du bâtiment principal 11, deux jeux de trois barres conductrices de secours 4, espacées les unes des autres de plusieurs mètres (environ 7 à 8 mètres pour un niveau de tension de 400 kV) et placées à une hauteur de plusieurs mètres au-dessus du sol. En effet, ces barres conductrices de secours 4 utilisent la technique d'isolation dans l'air et nécessitent donc de disposer d'un espace d'une largeur importante de chaque côté du bâtiment principal 11. On note aussi la présence de conducteurs aériens 3 reliant directement les deux jeux de barres de secours 4 précédents.

On conçoit que de tels jeux de barres de secours conventionnels nécessitent des emplacements au sol très importants, d'environ 50 mètres de largeur.

L'invention propose de résoudre ce problème, en mettant en oeuvre une autre technique de barre de secours.

En outre, les documents de brevets EP 1 168 551 A1 et FR 2 815 784 A1 constituent un art antérieur relativement proche.

### Résumé de l'invention

A cet effet, l'objet principal de l'invention est un poste de distribution électrique à haute tension, de structure linéaire, comprenant, entre autres :
- une pluralité de points d'arrivée et de sortie de lignes de courant électrique à haute tension, de part et d'autre du poste ;
- une pluralité de travées contenant des appareils de traitement du courant électrique auxquels sont connectées les lignes à haute tension, chacune par un premier conducteur aérien de raccordement amovible ;
- des liaisons de traversées aériennes pour relier entre eux deux points d'arrivée et de sortie, se faisant face par rapport au poste ;
- des seconds conducteurs aériens de raccordement amovibles pour relier les points d'arrivée et de sortie aux liaisons des traversées aériennes ;
- au moins un jeu de barres conductrices placées de manière longitudinale dans le poste, et constituant des conducteurs centraux, utilisant la technologique, dite, "sous enveloppe métallique" pour relier les travées entres elles ; et
- au moins un jeu de barres conductrices de secours pour en particulier court-circuiter une travée devant être mise hors service.

Selon l'invention, le jeu de barres de secours est unique et placé sous enveloppe métallique et au-dessus de l'ensemble constitué des barres conductrices, des travées et des points d'arrivée et de sortie.

Dans le cas où les barres conductrices et les travées sont placées à l'intérieur d'un poste, dit "PSEM", on prévoit que le jeu de barres de secours soit placé sur le toit de ce PSEM.

Dans le cas très fréquent où le poste de distribution électrique est utilisé pour du courant électrique sous forme triphasée, les points d'arrivée et de sortie, les barres conductrices, les barres conductrices de secours, les premier et les deuxième conducteurs aériens de raccordement et les liaisons de traversées aériennes étant par trois, on prévoit que chaque barre conductrice de secours est placée sous une enveloppe métallique.

Toujours dans le cas où le poste traite du courant électrique sous forme triphasée, les points d'arrivée et de sortie, les barres conductrices, les barres conductrices de secours, les premier et deuxième conducteurs aériens de raccordement et les liaisons de traversées aériennes étant par groupe de trois, on peut prévoir que les trois barres de secours des trois phases soient placées sous une seule enveloppe métallique.

### Liste des figures

L'invention et ses différentes réalisations et caractéristiques seront mieux comprises à la lecture de la description, accompagnée de plusieurs figures représentant respectivement :
- figure 1, en coupe transversale, déjà décrite, un poste électrique selon l'art antérieur ;
- figure 2A, en coupe, une première réalisation du poste selon l'invention en fonctionnent normal ;
- figure 2B, en vue de dessus, le poste, selon l'invention, représenté à la figure 2A, toujours en fonctionnement normal ;
- figure 3A, en coupe, le même poste, selon l'invention, dans une configuration de liaison de 2 travées avec shuntage complet du PSEM ;
- figure 3B, en vue de dessus, le même poste représenté à la figure 3A, toujours en shuntage du PSEM ;
- figure 4A, en coupe, le poste, selon l'invention, dans l'utilisation d'une travée de secours, au niveau de la travée shuntée à un endroit précis du poste ;
- figure 4B, en vue de dessus, le poste, selon l'invention, dans l'utilisation d'une travée de secours, comme représentées à la figure 4A ;
- figure 4C, en coupe, le même poste, selon l'invention, toujours dans l'utilisation d'une travée de secours, au niveau de ladite travée de secours ; et
- figure 5, en coupe, une deuxième réalisation possible du poste avec les 3 phases dans une même enveloppe, selon l'invention.

### Description détaillée de l'invention

### Situation de fonctionnement normal

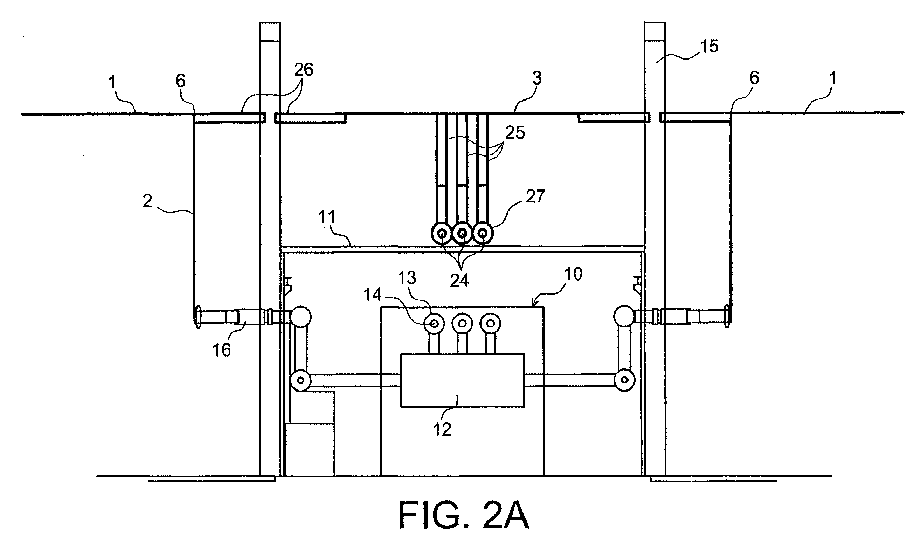

Sur la figure 2A, on retrouve des éléments principaux du poste électrique de l'art antérieur décrit en référence à la figure 1, à savoir des lignes électriques à haute tension 1 arrivant à des points d'arrivée et de sortie 6, positionnés auprès de deux portiques 15 latéraux, par l'intermédiaire d'isolateurs 26. Au milieu de ces portiques se trouve, placé sur le sol, le PSEM contenant le ou les jeu(x) de barres conductrices 12, nécessaire(s) au fonctionnement du poste et placées chacune dans une enveloppe métallique 13. On retrouve également les premiers conducteurs aériens de raccordement 2 amovibles, reliés aux bras de raccordement 16 traversant le bâtiment, pour amener le courant à l'intérieur du PSEM 10. Celui-ci se trouve donc à l'intérieur de bâtiment, symbolisé par le toit 11.

La nouveauté, selon l'invention, consiste à ce que les barres conductrices de secours 24 ne se trouvent pas éloignées du PSEM 10, sur les côtés du bâtiment, mais placées chacune dans une enveloppe métallique 27. Elles sont, de ce fait, horizontales et parcourent la totalité de la longueur du poste électrique. Les barres conductrices de secours 24 sont reliées par des traversées verticales 25 aux différentes liaisons de traversées aériennes 3, qui traversent chacune la largeur du poste, au milieu de deux rangées de lignes haute tension 1, qui sont extérieures au dispositif.

On conçoit ainsi que la largeur totale du poste électrique est grandement diminuée par rapport à celle du poste représenté à la figure 1.

Cette figure 2A montre au niveau d'une ou deux travées 12, le poste en fonctionnement normal, les barres conductrices de secours 24 n'étant pas utilisées.

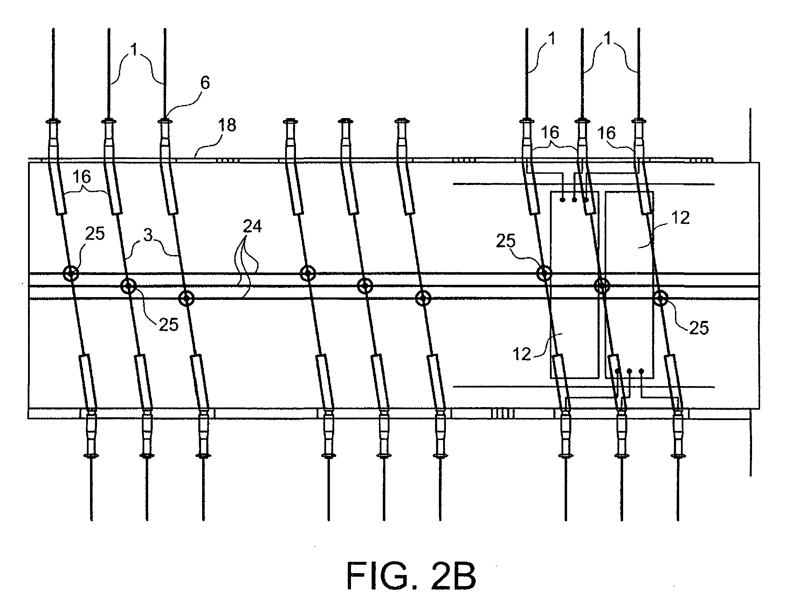

La figure 2B représente en vue de dessus le poste dans la même situation de fonctionnement normal. Les travées ne sont pas matérialisées mais leur emplacement est typiquement, mais pas obligatoirement, centré sur la phase centrale de chaque ligne à haute tension 1. Le courant est alors amené vers chaque travée par un conducteur aérien (non représenté sur la figure 2B et repéré 2 sur la figure 2A), aboutissant sur les traversées 16 du mur 18 du bâtiment. Dans cette situation de fonctionnement, les liaisons aériennes de raccordement 3 ne transitent pas de courant.

Les différents éléments d'appareillage, disjoncteurs, transformateurs et autres, installés au niveau des travées ne sont pas représentés. Seules, figurent les trois barres conductrices de secours 24 parcourant toute la longueur du poste et étant reliées aux liaisons de traversées aériennes 3, mais n'étant pas en fonctionnement dans ce cas-là.

Sur cette figure 2B, sont représentés les conducteurs de liaison 3 tendus entre les traversées 16. On peut noter que le jeu de barres de secours 24 n'a qu'un seul point de connexion, par l'intermédiaire des traversées verticales 25, pour une paire de travées 12 dont les traversées 16 se trouvent de chaque côté du bâtiment.

### Situation de secours avec shuntage total du poste sous enveloppe métallique

En cas de perte d'exploitation d'une ou plusieurs travées, pour défaut grave de fonctionnement ou maintenance importante, il peut être nécessaire de relier directement deux lignes aériennes 1 sans passer par le poste sous enveloppe métallique.

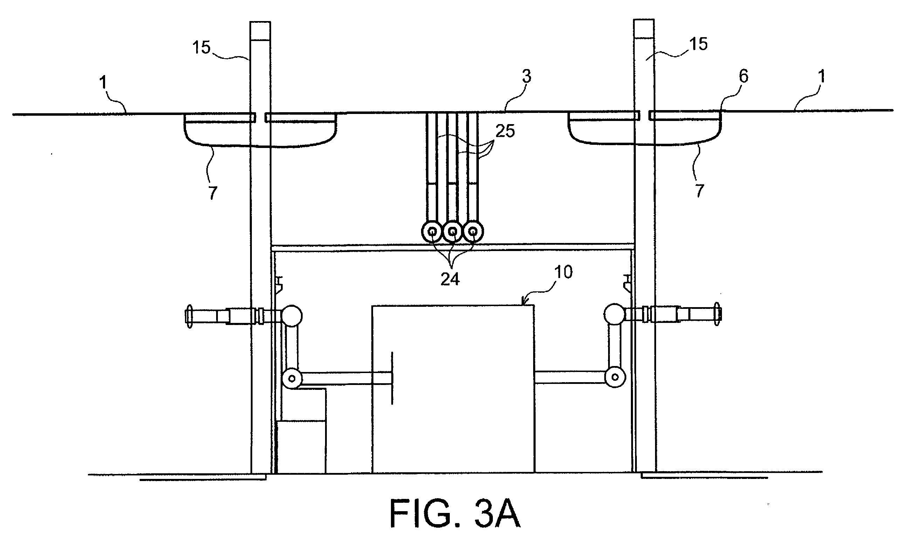

En référence à la figure 3A, une première solution consiste à shunter l'ensemble du PSEM 10, en réceptionnant le courant électrique sur la ligne haute tension 1 et en utilisant une liaison de traversée aérienne 3, par l'intermédiaire d'un deuxième conducteur aérien de raccordement 7. Le courant est alors descendu vers les barres conductrices de secours 24 par l'intermédiaire des traversées horizontales 25. Chaque barre conductrice de secours 24 transporte alors le courant électrique vers un autre endroit du poste pour le remonter par d'autres traversées verticales 25 et l'expédier vers une ligne à haute tension 1, destinée à un utilisateur, par l'intermédiaire de la liaison de traversée aérienne 3 correspondante et du conducteur aérien de raccordement 7 correspondant.

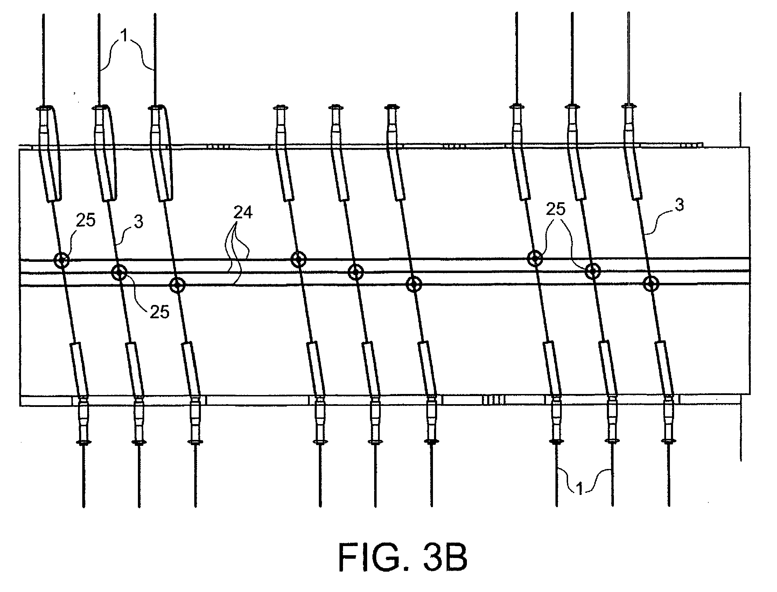

La figure 3B montre ce parcours, le courant arrivant par les lignes à haute tension 1, placées en haut à gauche, puis arrivant sur les trois liaisons de traversées aériennes 3 correspondantes et étant descendu par les traversées verticales 25 aux barres conductrices de secours 24. Le courant peut alors être redistribué vers trois autres lignes à haute tension 1, par exemple en bas à droite, par l'intermédiaire d'autres traversées verticales 25 correspondantes, ainsi que leur trois liaisons de traversée aériennes 3 correspondantes. Dans ce cas, la liaison entre les deux lignes reliées par le jeu de barres de secours est totalement extérieure au PSEM 10 qui est donc court-circuité ou shunté.

En cas de perte d'exploitation d'une seule travée, pour défaut grave de fonctionnement ou maintenance importante, il peut être nécessaire de relier directement une ligne aérienne 1 à une travée de secours du poste sous enveloppe métallique, en passant par le jeu de barres de secours 24.

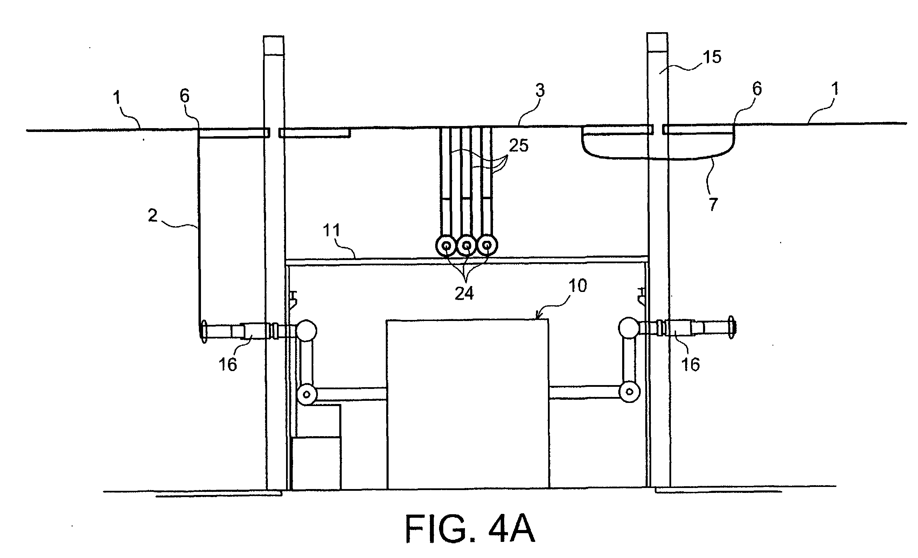

La figure 4A montre le court-circuitage d'une travée en utilisant une travée de secours. Cette dernière peut être une travée dédiée en permanence au secours, ou bien être choisie parmi les travées disponibles au moment où le court-circuitage d'une travée défectueuse a lieu.

Le courant est donc amené par la ligne à haute tension 1 de droite, relayée un deuxième conducteur de raccordement aérien 7 vers la liaison de traversée aérienne 3 correspondante. Dans ce cas, le premier conducteur de raccordement aérien, référencé 2 sur la figure 2A, a été enlevé pour que le courant ne descende pas vers la traversée 16 se trouvant à droite. Le courant est donc dirigé vers le jeu de barres conductrices de secours 24, toujours placées sur le toit 11 du bâtiment, par l'intermédiaire des traversées horizontales 25. Le courant peut alors être véhiculé vers un autre endroit du poste électrique, notamment une travée de secours spécifique, ou toute autre travée qui peut être utilisée en secours.

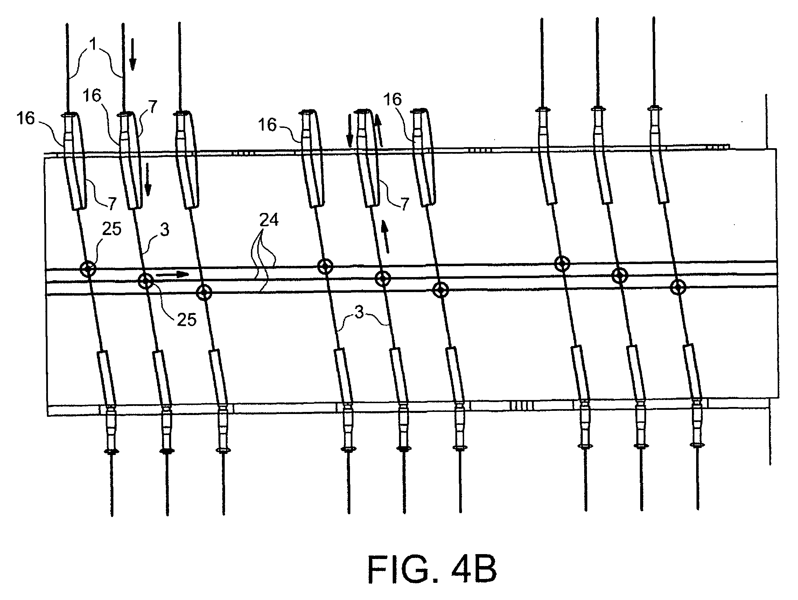

On se reporte alors à la figure 4B, représentant en vue de dessus ce cas particulier de shuntage d'une travée, en l'occasion la travée se trouvant plutôt sur la gauche de cette figure 4B. Le courant arrive donc par l'intermédiaire des lignes haute tension 1 placées en haut à gauche, ne descend pas vers la traversée 16, mais est dévié par le deuxième conducteur de raccordement aérien 7 vers la liaison de traversée aérienne 3 correspondante (voir les flèches). Ainsi, le courant est ensuite descendu par les traversées verticales 25 vers le jeu de barres de secours 24. Il est ensuite déplacé longitudinalement et redescendu vers la travée de secours qui se trouve, dans ce cas particulier, au centre de cette figure 4B. Pour cela, on utilise les liaisons aériennes de traversées 3 se trouvant au milieu de cette figure, les deuxièmes conducteurs de raccordement aériens 7 et qui descendent le courant sur les trois traversées 16 de la travée de secours.

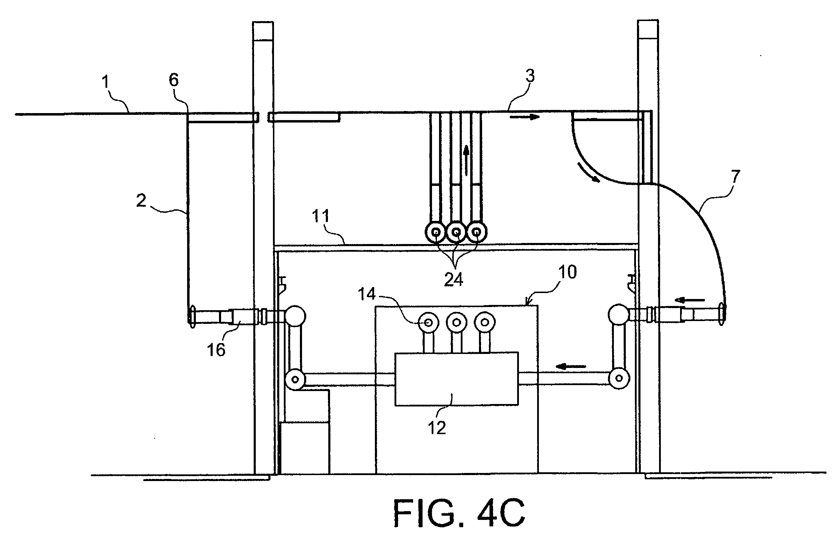

La figure 4C montre la descente, par le deuxième conducteur de raccordement aérien 7, relié à la traversée 16, permettant ainsi au courant d'accéder à l'intérieur du PSEM 10 dans lequel se trouvent les éléments, appareils et appareillages destinés à traiter le courant au niveau de cette travée de secours 12. La ligne 1, dont la travée de PSEM est court-circuitée, est donc à nouveau reliée au poste sous enveloppe métallique. Bien entendu, le courant peut être ainsi distribué vers les différentes lignes haute tension 1.

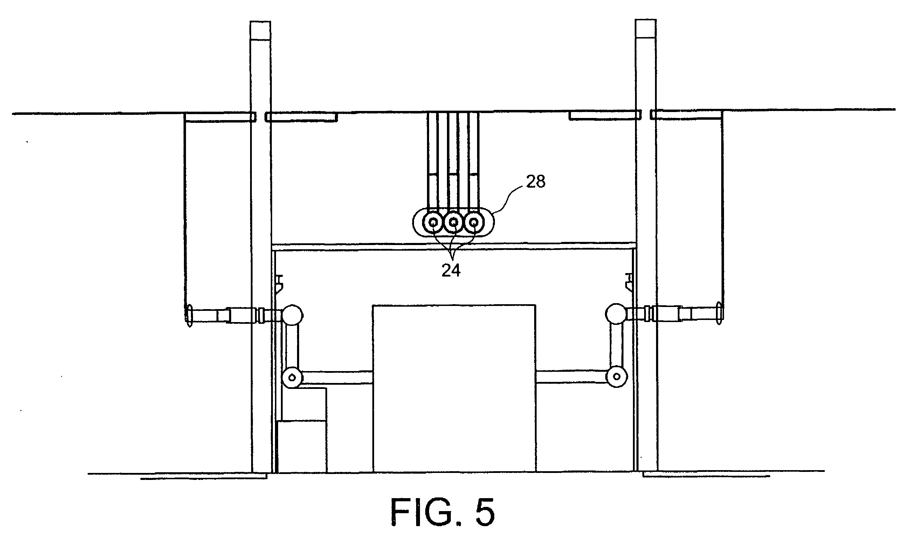

La figure 5 montre un poste électrique utilisant les caractéristiques de l'invention, notamment de son fonctionnement, mais dans lequel le jeu de trois barres conductrices de secours 24 est enfermé dans une seule enveloppe métallique 28. Bien entendu, celle-ci reste isolée grâce au dimensionnement adéquat de cette unique enveloppe métallique 28 permettant que les gaz isolants, tels que le SF₆, puissent assurer l'isolation des trois barres conductrices de secours, véhiculant les trois phases du courant à distribuer.

### Avantages de l'invention

L'invention permet d'optimiser la hauteur des portiques et des dimensions du terrain intégrant un PSEM, notamment sa largeur. Bien entendu, le terrain nécessaire pour une telle solution est nettement moins important, car il ne nécessite pas l'emplacement dédié à un ou deux jeux de secours conventionnels, naturellement positionnés de part et d'autre du bâtiment, comme le montre la figure 1, mais bien au contraire au-dessus du bâtiment renfermant le PSEM.

La technologie, dite "sous enveloppe métallique", fait bénéficier le jeu de barres de secours de la fiabilité bien supérieure de ce type de matériel qui soustrait aux conditions ambiantes les parties sous tension et les isolateurs du poste.

On précise que le jeu de barres de secours, réalisé sous enveloppe métallique, peut être indifféremment monophasé, avec une phase par enveloppe ou triphasé, avec trois phases pour une seule enveloppe comme le montre la figure 5.

La travée de secours utilisée peut être dédiée, ou bien être n'importe quelle autre travée disponible et réaffectée à cet usage pour remplir cette fonction de travée de secours.

La disposition des liaisons aériennes de traversées 3 permet de n'avoir qu'un point de raccordement par paire de travées, ce qui est économiquement intéressant.

L'invention permet aussi, en cas d'indisponibilité du poste sous enveloppe métallique, de conserver une liaison entre deux lignes aériennes stratégiques quelconques parmi toutes celles reliées au poste sous enveloppe métallique.

Enfin, le raccordement aérien au jeu de barres de secours permet d'éviter la perte de disponibilité qui résulterait d'un raccordement purement sous enveloppes métalliques.

## Revendications

1. Poste sous enceinte métallique (PSEM) de distribution électrique à haute tension de structure linéaire, comprenant :
- une pluralité de points d'arrivée et de sortie (6) de lignes aériennes de courant électrique à haute tension (1), de part et d'autre du poste ;
- une pluralité de travées (12) contenant des appareils de traitement du courant électrique, auxquelles sont connectées les lignes à haute tension (1) chacune par un premier conducteur aérien de raccordement (2) amovible ;
- au moins un jeu de barres conductrices (14), placées de manière longitudinales dans le poste et constituant des conducteurs centraux, pour relier les travées entre elles ; les barres conductrices (14) et les travées (12) étant placées à l'intérieur du PSEM ;
- des liaisons de traversées aériennes (3) pour relier entre eux deux points d'arrivée et de sortie (6) se faisant face par rapport au poste ;
- des seconds conducteurs aériens de raccordement amovibles (7), pour relier les points d'arrivée et de sortie (6) aux liaisons de traversée aériennes (3) ;
- au moins un jeu de barres conductrices de secours (24) pour court-circuiter à la fois au moins une travée (12) devant être mise hors service,
**caractérisé en ce que**,
(10), le jeu de barres de secours (24) est unique et placé sous enveloppe métallique sur le toit du PSEM (10) et au-dessus de l'ensemble constitué des barres conductrices (14), les travées (12) et les points d'arrivée de sortie (6).

2. Poste de distribution électrique selon la revendication 1, mettant en oeuvre la technique de distribution électrique en triphasé, les points d'arrivée et de sortie (6), les barres conductrices (14), les barres conductrices de secours (24), les premier et deuxième conducteurs aériens de raccordement amovibles (2, 6) et les liaisons de traversées aériennes (3) sont par groupe de trois, **caractérisé en ce que** chaque barre conductrice de secours (24) étant chacune sous une enveloppe métallique.

3. Poste de distribution électrique selon la revendication 1 mettant en oeuvre la technique de distribution électrique sous forme triphasée, les points d'arrivée et de sortie (6), les barres conductrices (14), les barres conductrices de secours (24), les premiers et deuxièmes conducteurs aériens de raccordement (26) étant par trois et les liaisons de traversée aériennes, **caractérisé en ce que** les trois barres de secours (34) des trois phases sont une seule enveloppe métallique (35).

## Patentansprüche

1. Metallgekapselte elektrische Hochspannungs-Verteilerstation (PSEM) mit linearer Struktur, umfassend:
- eine Mehrzahl von Ankunfts- und Ausgangspunkten (6) von elektrischen Hochspannungs-Luftstromleitungen (1) auf beiden Seiten der Station;
- eine Mehrzahl von Feldern (12), die Geräte zur Verarbeitung des elektrischen Stroms enthalten, an die die Hochspannungsleitungen (1) jeweils durch einen ersten abnehmbaren Anschlussluftleiter (2) angeschlossen sind;
- wenigstens einen Satz von Stromschienen (14), die in longitudinaler Weise in der Station platziert sind und zentrale Leiter bilden, um die Felder miteinander zu verbinden, wobei die Stromschienen (14) und die Felder (12) im Inneren der PSEM platziert sind;
- Durchführungsluftverbindungen (3) zum Verbinden von zwei Ankunfts- und Ausgangspunkten (6), die sich bezüglich der Station gegenüber liegen, miteinander;
- zweite abnehmbare Anschlussluftleiter (7) zum Verbinden der Ankunfts- und Ausgangspunkte (6) mit den Durchführungsluftverbindungen (3);
- wenigstens einen Satz von Sicherheitsstromschienen (24) zum gleichzeitigen Kurzschließen wenigstens eines Felds (12), das außer Dienst genommen werden muss,
**dadurch gekennzeichnet, dass**
der Satz von Sicherheitsschienen (24) ein einziger ist und metallgekapselt auf dem Dach der PSEM (10) und über der Gesamtanordnung platziert ist, die gebildet wird durch die Stromschienen (14), die Felder (12) und die Ankunfts- und Ausgangspunkte (6).

2. Elektrische Verteilerstation nach Anspruch 1, die die Technik der dreiphasigen Stromverteilung verwendet, wobei die Ankunfts- und Ausgangspunkte (6), die Stromschienen (14), die Sicherheitsstromschienen (24), der erste und der zweite abnehmbare Anschlussluftleiter (2, 6) sowie die Durchführungsluftverbindungen (3) in Gruppen von drei vorgesehen sind, **dadurch gekennzeichnet, dass** jede Sicherheitsstromschiene (24) jeweils metallgekapselt ist.

3. Elektrische Verteilerstation nach Anspruch 1, die die Technik der dreiphasigen Stromverteilung verwendet, wobei die Ankunfts- und Ausgangspunkte (6), die Stromschienen (14), die Sicherheitsstromschienen (24), der erste und der zweite Anschlussluftleiter (26) in Gruppen von drei vorgesehen sind sowie die Durchführungsluftverbindungen, **dadurch gekennzeichnet, dass** die drei Sicherheitsschienen (34) der drei Phasen mit einer einzigen Metallkapselung (35) vorgesehen sind.

## Claims

1. A high voltage power distribution substation of linear structure, including among other things the following:
- a plurality of power input and output points (6) for high voltage power lines (1), on either side of the substation;
- a plurality of bays (12) containing power-handling equipment to which the high voltage lines (1) are connected, each by a first removable overhead connecting conductor (2);
- overhead bushing links (3) for connecting together two points (6), namely a power input point and a power output point in facing relationship to each other across the substation;
- second removable overhead connecting conductors (7) for connecting the power input and output points (6) to the overhead bushing links (3);
- at least one set of main busbars (14), positioned lengthwise in the substation and constituting central conductors that are adapted to use so-called metal-enclosed technology for connecting the bays together; and
- at least one set of emergency busbars (24) for short-circuiting at least one bay (12) that is to be taken out of use;
the substation being **characterized in that** the set of emergency busbars (24) is single and metal-enclosed and placed on the roof of the GIS (10) and positioned above the assembly constituted by the main busbars (14) and bays (12) and **in that** the set of emergency busbars (24) and the power input and output points (6).

2. A power distribution substation according to claim 1 adapted for three-phase power distribution, in which the power input and output points (6), the main busbars (14), the emergency busbars (24), the first and second removable overhead connecting conductors (2, 7), and the overhead bushing links (3) are grouped in threes, **characterized in that** each emergency busbar (24) is metal-enclosed.

3. A power distribution substation according to claim 1 adapted for three-phase power distribution, in which the power input and output points (6), the main busbars (14), the emergency busbars (24), the first and second overhead connecting conductors (2, 7), and the overhead bushing links being in threes, **characterized in that** the three emergency busbars (24) of the three phases are in a single metal casing (28).
